# EUROPEAN PATENT APPLICATION

(11) **EP 2 385 650 A2**
(43) Date of publication of application: **09.11.2011**
(21) Application number: 11003746.2
(22) Date of filing: 06.05.2011
(51) Int. Cl.: H04L 5/00, H04L 1/16, H04L 1/18

(54) **Method of handling a physical uplink control channel transmission and related communication device**

(30) Priority: 06.05.2010 US 331840 P
(71) Applicant: HTC Corporation, Taoyuan County 330 (TW)
(72) Inventor: Jen, Yu-Chih, Taoyuan City Taoyuan County 330 (TW)
(74) Representative: Klang, Alexander H.

(57) **Abstract**

A method of handling a PUCCH transmission for a mobile device with a carrier aggregation (CA) in a wireless communication system is disclosed. The method comprises receiving a configuration or an
activation of the CA with at least one UL component carrier and at least one downlink component carrier from a network of the wireless communication system, wherein at least one of the at least one UL component carrier is configured for PUCCH transmission, and
performing at least one PUCCH transmission corresponding to the at least one DL component carrier to the network on one of at least one of the at least one UL component carrier configured for PUCCH transmission according to at least one PUCCH format.

## Description

### Background of the Invention

### 1. Field of the Invention

The present invention relates to a method used in a wireless communication system and related communication device, and more particularly, to a method of handling a physical uplink control channel transmission in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters (e.g. a precoding matrix indicator (PMI) and a rank indicator (RI)) of the UE. The UL control information may not be transmitted along with the data in the LTE system, i.e., transmitted by using a dedicated resource. In this situation, the UE transmits the UL control information to the eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on the UL data scheduling. Besides, the resource blocks hop within slots (intra-subframe hopping) or between slots (inter-subframe hopping) for gaining frequency diversity. Moreover, UL control information of a plurality of UEs can be multiplexed in the PUCCH region by using a base sequence with different cyclic time shifts in a frequency domain, and different orthogonal block spreading codes in a time domain, so as to exploit the PUCCH region efficiently. On the other hand, a sounding reference signal (SRS) and the PUCCH cannot be transmitted in the same subframe in the LTE system. If the SRS and the PUCCH are scheduled to be transmitted in the same subframe, the UE drops the SRS or shortens the PUCCH before the transmission.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases bandwidth flexibility by aggregating the non-continuous component carriers. A component carrier is either used as a UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs) . The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

Since a UL control channel (e.g. the PUCCH) in the LTE system is designed for the UE and the eNB supporting only a single component carrier, the UL control channel cannot be used in the LTE-A system with the CA. In detail, additional UL control information corresponding to multiple UL/DL component carriers is needed to be transmitted on the UL control channel, and the UL control channel in the LTE system can not accommodate the additional UL control information. Therefore, how to exploit the UL control channel more efficiently in the LTE system so as to accommodate both the UL control information and the additional UL control information is a topic for discussion. On the other hand, a large amount of interference is generated when multiple UEs transmit the UL control information on multiple UL component carriers to the eNB at the same time. For the eNB to receive correctly the UL control information, the additional UL control information and data transmitted by the multiple UEs, it is important to reduce the large amount of interference generated by the multiple UEs. Accordingly, parameters and protocols as well as respective signalings related to the PUCCH in the LTE system must be extended or modified for the LTE-A system.

### Summary of the Invention

The disclosure therefore provides a method and related communication device for handling a UL control information transmission and UL control channels to solve the abovementioned problems.

A method of handling a physical uplink (UL) control channel (PUCCH) transmission for a mobile device with a carrier aggregation (CA) in a wireless communication system is disclosed. The method comprises receiving a configuration or an activation of the CA with at least one UL component carrier and at least one downlink (DL) component carrier from a network of the wireless communication system, wherein at least one of the at least one UL component carrier is configured for PUCCH transmission, and performing at least one PUCCH transmission corresponding to the at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of a base sequence or both.

A method of handling a physical uplink (UL) control channel (PUCCH) transmission for a mobile device with a carrier aggregation (CA) in a wireless communication system is disclosed. The method comprises receiving a configuration or an activation of the CA with at least one UL component carrier and at least one downlink (DL) component carrier from a network of the wireless communication system, wherein at least one of the at least one UL component carrier is configured for PUCCH transmission, and performing at least one PUCCH transmission corresponding to the at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of at least one base sequence or both.

A method of handling a physical uplink (UL) control channel (PUCCH) transmission for a mobile device with a carrier aggregation (CA) in a wireless communication system is disclosed. The method comprises receiving a configuration or an activation of the CA with at least one UL component carrier and at least one downlink (DL) component carrier from a network of the wireless communication system, and transmitting at least one PUCCH to the network in at least one PUCCH resource on at least one of the at least one UL component carrier, wherein the at least one PUCCH comprises at least one of a channel quality indicator (CQI), a scheduling request (SR) and an acknowledgment/negative acknowledgement (ACK/NACK) corresponding to the at least one DL component carrier, and the PUCCH resource depends on at least one of a plurality of mobile device-specific configured parameters, a DL component carrier-specific offset, a DL component carrier-specific index, a plurality of received physical DL control channel (PDCCH) resources, a UL component carrier bandwidth, a PUCCH format, a cell-specific configuration, a orthogonal sequence hopping, a sequence group hopping pattern, a sequence group shift pattern, a cyclic time shift hopping, a pseudo random sequence generator and a plurality of multiplexing opportunities.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

### Detailed Description

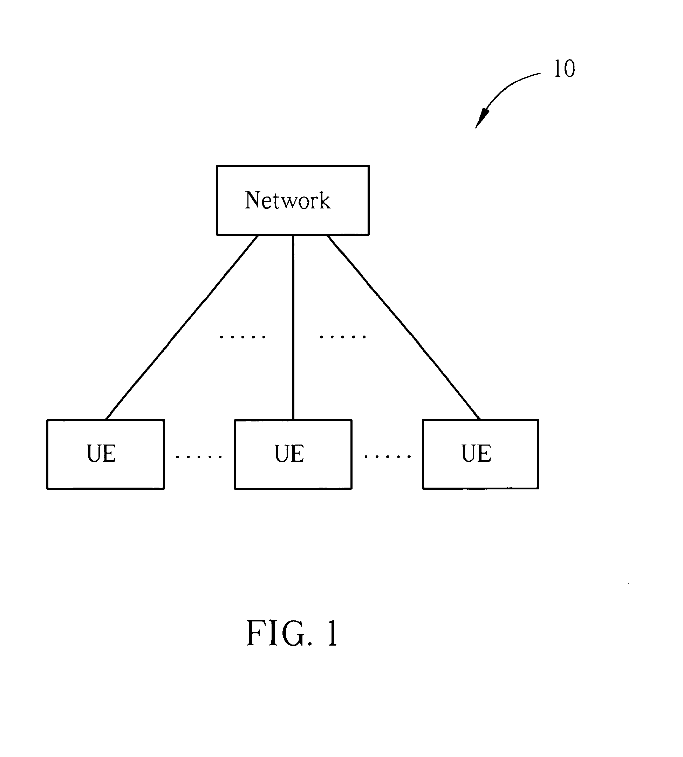

Please refer to Fig. 1, which is a schematic diagram of a wireless communication system 10 according to an example of the present disclosure. The wireless communication system 10, such as a long term evolution-advanced (LTE-A) system or other mobile communication systems supporting a carrier aggregation (CA), is briefly composed of a network and a plurality of user equipments (UEs) . In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

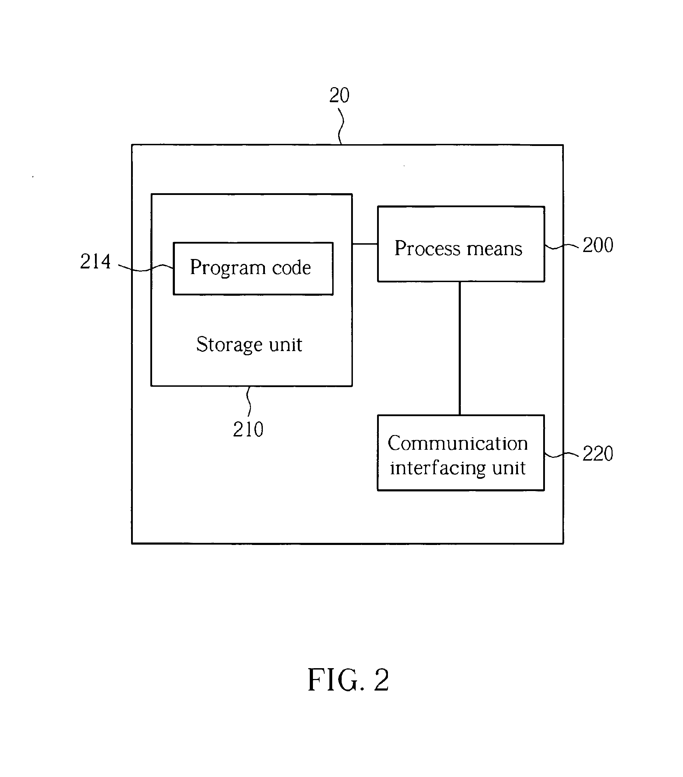

Please refer to Fig. 2, which is a schematic diagram of a communication device 20 according to an example of the present disclosure. The communication device 20 can be the UE or the network shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

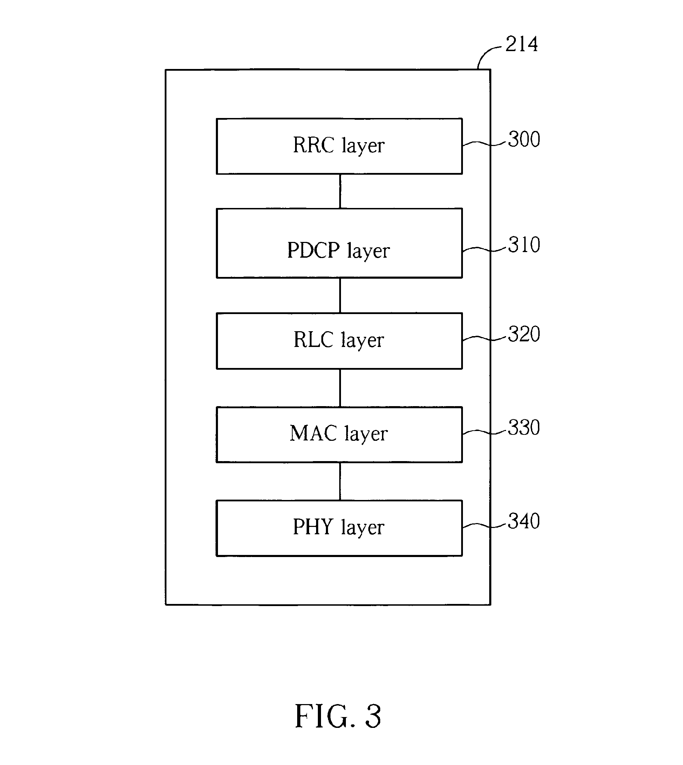

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control, and radio bearer control responsible for generating or releasing radio bearers. The PHY layer 340 is used to provide physical channels, e.g. a physical UL control channel (PUCCH), a physical UL shared channel (PUSCH) and a physical DL control channel (PDCCH), such that control information and data of different UEs can be transmitted and received with low interferences or even without the interferences. The MAC layer 330 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, an HARQ negative acknowledgement (NACK) is reported to the network.

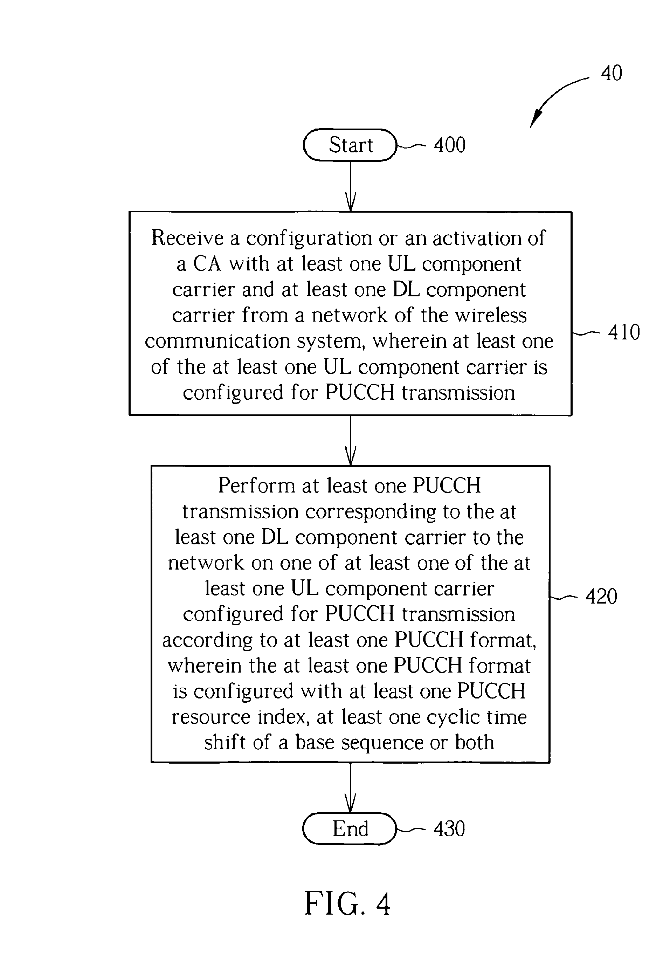

Please refer to Fig. 4, which is a flowchart of a process 40 according to an example of the present disclosure. The process 40 is utilized in a UE of the wireless communication system 10 shown in Fig. 1, to handle a PUCCH transmission. The process 40 may be compiled into the program code 214 and includes the following steps:

Step 400: Start.

Step 410: Receive a configuration or an activation of a CA with at least one UL component carrier and at least one downlink (DL) component carrier from a network of the wireless communication system, wherein at least one of the at least one UL component carrier is configured for PUCCH transmission.

Step 420: Perform at least one PUCCH transmission corresponding to the at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of a base sequence or both.

Step 430: End.

According to the process 40, after the UE receives the configuration or the activation of the CA with the at least one UL component carrier and the at least one DL component carrier from the network of the wireless communication system, the UE performs the PUCCH transmission corresponding to the at least one DL component carrier to the network on the one of the at least one UL component carrier according to the at least one PUCCH format, wherein the at least one PUCCH format of the each of the at least one UL component carrier is configured with the at least one PUCCH resource index, the at least one cyclic time shift of the base sequence or both. Please note that, a consideration based on which the at least one PUCCH format is configured with the one of the at least one UL component carrier can be an efficient resource allocation, an interference reduction, a low power consumption and/or a UE capability, and is not limited.

According to a certain purpose mentioned above, the network may configure the UE to perform the PUCCH transmission to the network only on a specific UL component carrier. Furthermore, each of the at least one PUCCH format may be configured with the at least one PUCCH resource index, the at least one cyclic time shift of the base sequence or both, to indicate a format for the PUCCH transmission. Besides, for each of the at least one PUCCH format, the network configures a common PUCCH resource index, different cyclic time shifts or both to the UE for the at least one DL component carrier, wherein each of the different cyclic time shifts can be derived from a PUCCH resource index or derived from a combination of the PUCCH resource index and a DL component carrier index (e.g. a carrier indication field (CIF)). Therefore, the UL control channel is exploited efficiently. On the other hand, to reduce the interference generated by the UE during the PUCCH transmission, a cyclic shift hopping (e.g. per single-carrier frequency division multiple access (SC-FDMA) symbol) can be applied for an inter-cell interference randomization, and/or a cyclic time shift remapping (e.g. between slots) can be applied for an intra-cell interference randomization.

Alternatively, to exploit the PUCCH more efficiently and to further reduce the interference generated by the UE during the PUCCH transmission, the UE can modulate the PUCCH transmission (e.g. PUCCH signals) of the at least one PUCCH format in a PUCCH region of a first subframe by using corresponding (distinct) cyclic time shifts of the base sequence (e.g. a Zadoff-Chu (ZC) sequence), wherein the PUCCH transmission (e.g. PUCCH signals) of the at least one PUCCH format corresponds to at least one transmission on the at least one DL component carrier in a second subframe. Further, one of the at least one PUCCH format is used for an ACK/NACK in the PUCCH region corresponding to the at least one transmission on the at least one DL component carrier in the second subframe. On the other hand, to reduce the interference generated by the UE to neighbor cells, a sequence hopping or a sequence group hopping (e.g. per slot) can be applied to a plurality of reference signals transmitted in the PUCCH region.

Therefore, according to the above illustration and the process 40, to mitigate the interference generated by the UE, multiplexing or join coding/bundling of the UL control information for the CA is supported for the HARQ per component carrier. In this situation, the ACK/NACK corresponding to different DL component carriers is multiplexed on the same PUCCH region (e.g. using different cyclic time shifts of a ZC sequence) for PUCCHs corresponding to different DL component carriers of the UE.

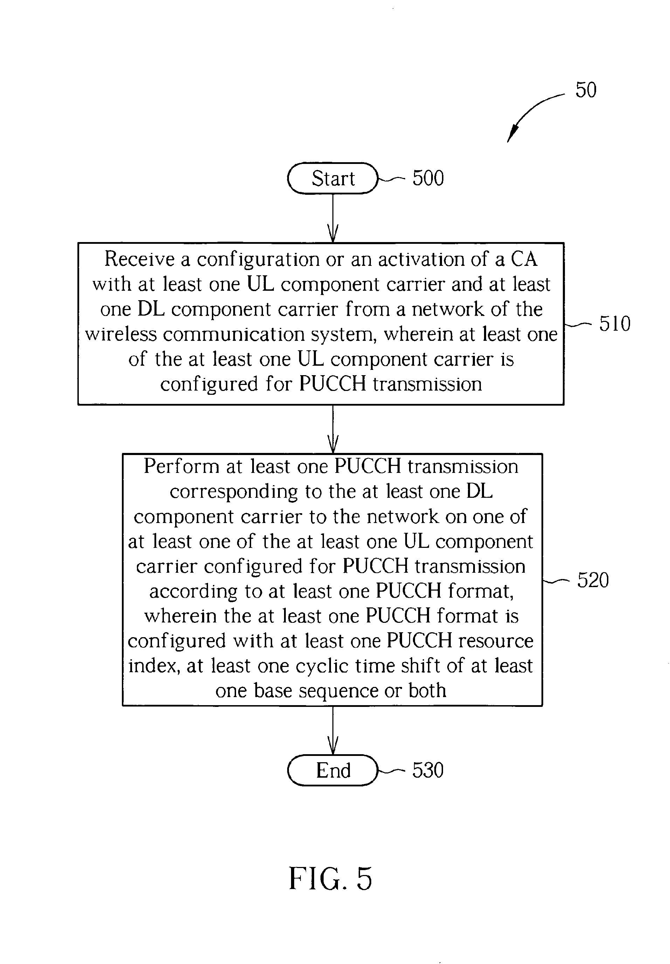

Please refer to Fig. 5, which is a flowchart of a process 50 according to an example of the present disclosure. The process 50 is utilized in a UE of the wireless communication system 10 shown in Fig. 1, to handle a PUCCH transmission. The process 50 may be compiled into the program code 214 and includes the following steps:

Step 500: Start.

Step 510: Receive a configuration or an activation of a CA with at least one UL component carrier and at least one downlink (DL) component carrier from a network of the wireless communication system, wherein at least one of the at least one UL component carrier is configured for PUCCH transmission.

Step 520: Perform at least one PUCCH transmission corresponding to the at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of at least one base sequence or both.

Step 530: End.

According to the process 50, after the UE receives the configuration or the activation of the CA with the at least one UL component carrier and the at least one DL component carrier from the network of the wireless communication system, the UE performs the PUCCH transmission corresponding to the at least one DL component carrier to the network on the one of the at least one UL component carrier according to the at least one PUCCH format, wherein the at least one PUCCH format of the one of the at least one UL component carrier is configured with the at least one PUCCH resource index, the at least one cyclic time shift of the at least one base sequence or both. Please note that, a consideration based on which the at least one PUCCH format is configured and the one of the at least one UL component carrier can be an efficient resource allocation, an interference reduction, a low power consumption and/or a UE capability, and is not limited. Different from the process 40 where only a base sequence is used for a UE, multiple base sequences are used in the process 50.

According to a certain purpose mentioned above, the network may configure the UE to only perform the PUCCH transmission to the network on a specific UL component carrier. Furthermore, each of the at least one PUCCH format is configured with the at least one PUCCH resource index, the at least one cyclic time shift of the base sequence or both, to indicate a format for the PUCCH transmission. Besides, for each of the at least one PUCCH format, the network configures a common PUCCH resource index, at least one cyclic time shift or both to the UE for the at least one DL component carrier, wherein a different base sequence is configured for each of the at least one DL component carrier and each of the at least one cyclic time shift is derived from a PUCCH resource index or is derived from a combination of the PUCCH resource index and a DL component carrier index (e.g. a CIF) . Please note that, base sequences for DL component carriers are respectively configured; a base sequence for a DL component carrier may be different from or the same as that for another DL component carrier. Thus, the base sequences for DL component carriers may be different, all the same, or partly the same. Therefore, the UL control channel is exploited efficiently. On the other hand, to reduce the interference generated by the UE during the PUCCH transmission, a cyclic shift hopping (e.g. per SC-FDMA symbol) can be applied for an inter-cell interference randomization, and/or or a cyclic time shift remapping (e.g. between slots) can be applied for an intra-cell interference randomization.

Alternatively, to exploit the PUCCH more efficiently and to further reduce the interference generated by the UE during the PUCCH transmission, the UE can modulate the PUCCH transmission (e.g. PUCCH signals) of the at least one PUCCH format in a PUCCH region of a first subframe by using at least on cyclic time shift of corresponding base sequences (e.g. ZC sequences), wherein both the PUCCH transmission of the at least one PUCCH format and the plurality of base sequences correspond to at least one transmission on the at least one DL component carrier in a second subframe. Further, one of the at least one PUCCH format is used for an ACK/NACK in the PUCCH region corresponding to the at least one transmission on the at least one DL component carrier in the second subframe. On the other hand, to reduce the interference generated by the UE to neighbor cells, a sequence hopping or a sequence group hopping (e. g. per slot) is applied to a plurality of reference signals transmitted in the PUCCH region.

Therefore, according to the above illustration and the process 50, to mitigate the interference generated by the UE, multiplexing or join coding/bundling of the UL control information for the CA is supported for the HARQ per component carrier. In this situation, the ACK/NACK corresponding to different DL component carriers is multiplexed on the same PUCCH region (e.g. using the same or different cyclic time shifts of ZC sequences) for PUCCHs corresponding to different DL carriers of the UE.

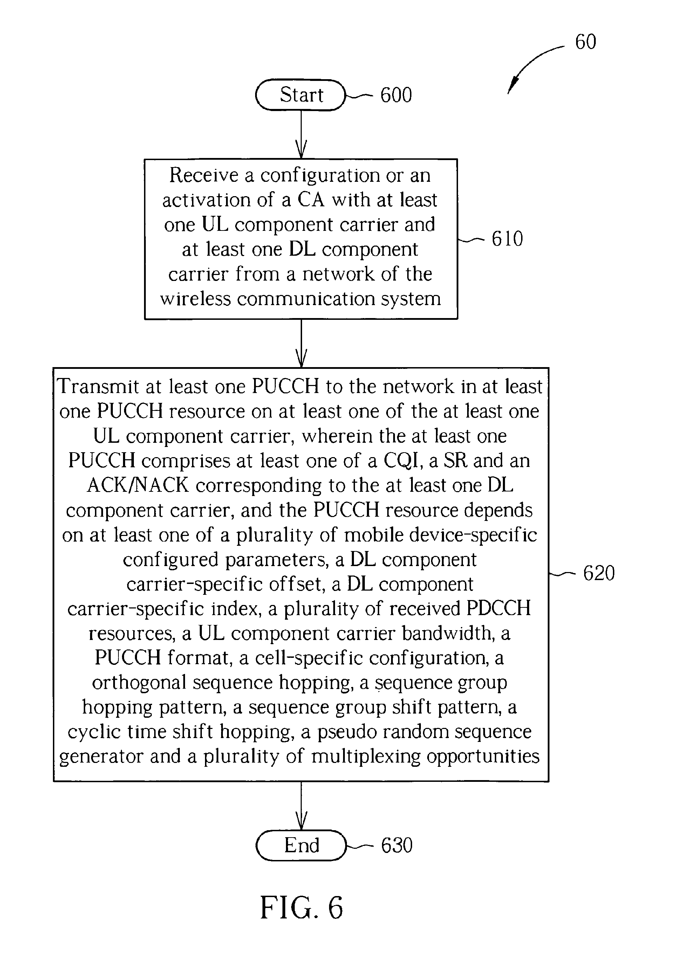

Please refer to Fig. 6, which is a flowchart of a process 60 according to an example of the present disclosure. The process 60 is utilized in a UE of the wireless communication system 10 shown in Fig. 1, to handle a PUCCH transmission. The process 60 may be compiled into the program code 214 and includes the following steps:

Step 600: Start.

Step 610: Receive a configuration or an activation of a CA with at least one UL component carrier and at least one downlink (DL) component carrier from a network of the wireless communication system.

Step 620: Transmit at least one PUCCH to the network in at least one PUCCH resource on at least one of the at least one UL component carrier, wherein the at least one PUCCH comprises at least one of a channel quality indicator (CQI), a scheduling request (SR) and an acknowledgment/negative acknowledgement (ACK/NACK) corresponding to the at least one DL component carrier, and the PUCCH resource depends on at least one of a plurality of mobile device-specific configured parameters, a DL component carrier-specific offset, a DL component carrier-specific index, a plurality of received physical DL control channel (PDCCH) resources, a UL component carrier bandwidth, a PUCCH format, a cell-specific configuration, a orthogonal sequence hopping, a sequence group hopping pattern, a sequence group shift pattern, a cyclic time shift hopping, a pseudo random sequence generator and a plurality of multiplexing opportunities.

Step 630: End.

According to the process 60, after the UE receives the configuration or the activation of the CA with the at least one UL component carrier and the at least one DL component carrier from the network of the wireless communication system, the UE transmits the at least one PUCCH to the network in the PUCCH resource (e.g. a PUCCH region) on the at least one UL component carrier, wherein the at least one PUCCH comprises at least one the CQI, the scheduling request, the ACK/NACK corresponding to the at least one DL component carrier. Further, the PUCCH resource depends on at least one of the plurality of UE-specific configured parameters, the DL component carrier-specific offset, the DL component carrier-specific index, the plurality of received PDCCH resources, the UL component carrier bandwidth, the PUCCH format, the cell-specific configuration (e.g. a subframe configuration and a number of available cyclic time shifts), the orthogonal sequence hopping (e.g. different base sequences for different PUCCH regions), the sequence group hopping/shift pattern (e.g. a function of cell ID, a PUCCH region-specific shift offset, or a hopping pattern), the cyclic time shift hopping, the pseudo random sequence generator and the plurality of multiplexing opportunities (e.g. an index to one of combinations of a cyclic time shift, an orthogonal cover code, orthogonal cyclic time shifts, and/or a group of orthogonal cyclic time shifts for different PUCCH regions).

Besides, the UE may also receive a configuration for a semi-persistent scheduling on a first DL component carrier of the at least one DL component carrier from the network on the first DL component carrier or a second DL component carrier of the at least one DL component carrier, wherein the configuration indicates at least one PUCCH resource index (e.g. the PUCCH format) for the at least one PUCCH on the at least one UL component carrier, which is linked to at least one of the first and the second DL component carriers. Alternatively, the UE may receive a PDCCH for a dynamic scheduling on a first DL component carrier of the at least one DL component carrier from the network on the first downlink component carrier or a second DL component carrier of the at least one DL component carrier, and the PDCCH explicitly indicates (e.g. by using a field in DL control information (DCI) ) or implies (e.g. according to an index of control channel element) the at least one PUCCH resource index (e.g. for the PUCCH format) for the at least one PUCCH on the at least one UL component carrier, which is linked to at least one of the first and the second DL component carriers. And the at least one PUCCH resource index implied by the PDCCH comprises the DL component carrier-specific offset and the DL component carrier-specific index for at least one of the PUCCH resource and a cyclic time shift indication. In short, the network can use the semi-persistent or the dynamic scheduling to indicate resources with low inter-cell/intra-cell interference to the UE such that the UE can transmit the at least one PUCCH by using the resources.

According to a configuration or deployment of the wireless communication, the network may configure the at least one of the plurality of UE-specific configured parameters (e.g. a PUCCH resource index for the PUCCH format), the DL component carrier-specific offset, the DL component carrier-specific index, the plurality of received PDCCH resources, the UL component carrier bandwidth, the PUCCH format, the cell-specific configuration (e.g. the subframe configuration and the number of available cyclic time shifts), the orthogonal sequence hopping (e.g. different base sequences for different PUCCH regions), the sequence group hopping/shift pattern (e.g. the function of cell ID, the PUCCH region-specific shift offset, or the hopping pattern), the cyclic time shift hopping, the pseudo random sequence generator and the plurality of multiplexing opportunities (e.g. the index to one of combinations of the cyclic time shift, the orthogonal cover code, the orthogonal cyclic time shifts, and/or the group of orthogonal cyclic time shifts for different PUCCH regions) by using a higher layer broadcast signaling or a UE-dedicated signaling (e.g. a RRC signaling or a PDCCH signaling). Further, the abovementioned illustrations apply to the UE configured with a high rank single user-multiple-input multiple-output (SU-MIMO) or a multiuser-MIMO (MU-MIMO).

Since the CA configured to the UE is UE-specific or cell-specific, different UEs can be allocated different number of DL component carriers and different DL component carriers. According to the above illustration and the process 60, when the UE receives a DL assignment for reception of transmissions on DL component carriers, no matter whether cross carrier scheduling/assignment is used, the UE has information of where/how the at least one PUCCH (e.g. the UL control information/feedback) can be transmitted to reduce inter-cell/intra-cell interference.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, a UE in the LTE system can only perform the transmissions and receptions on a UL component carrier and a DL component carrier, respectively. Therefore, resources of UL control channels are sufficient for a UL control information transmission regarding feedbacks to the receptions on the DL component carrier or other control information. However, the UE in the LTE-A system can perform the transmissions and the receptions on multiple UL component carriers and multiple DL component carriers, respectively. The resources of the UL control channels are not sufficient for the UL control information transmission due to a large amount of the feedbacks to the receptions on the multiple DL component carriers and the other control information. Further, the UE generates more interference to the network due to transmissions on multiple UL component carriers. The network can not correctly receive control information and data transmitted on the UL when more and more UEs use multiple UL component carriers. Therefore, additional resources and novel resource allocation methods must be used for the increased UL control information and data transmissions on the UL. The exemplary method and means are provided accordingly to enhance the UL transmission for the UE in the LTE system to operate in the wireless communication system (e.g. the LTE-A system) with the CA.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a physical uplink (UL) control channel (PUCCH) transmission for a mobile device with a carrier aggregation (CA) in a wireless communication system, the method comprising:
receiving a configuration or an activation of the CA with at least
one UL component carrier and at least one downlink (DL) component carrier from a network of the wireless communication system, wherein at least one of the at least one UL component carrier is configured for PUCCH transmission; and
performing at least one PUCCH transmission corresponding to the
at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of a base sequence or both.

2. The method of claim 1, wherein each of the at least one PUCCH format is configured with the at least one PUCCH resource index, the at least one cyclic time shift of the base sequence, or both.

3. The method of claim 1, wherein for one of the at least one PUCCH format, the network configures at least one of a common PUCCH resource index and different cyclic time shifts to the mobile device for the at least one DL component carrier.

4. The method of claim 3, wherein one of the different cyclic time shifts is derived from a PUCCH resource index or is derived from a combination of the PUCCH resource index and a DL component carrier index.

5. The method of claim 1 further comprising modulating or scrambling the at least one PUCCH transmission of the at least one PUCCH format on a PUCCH region in a first subframe by using corresponding cyclic time shifts of the base sequence, wherein the at least one PUCCH transmission of the at least one PUCCH format corresponds to at least one transmission or signaling on the at least one DL component carrier in a second subframe.

6. A method of handling a physical uplink (UL) control channel (PUCCH) transmission for a mobile device with a carrier aggregation (CA) in a wireless communication system, the method comprising:
receiving a configuration or an activation of the CA with at least
one UL component carrier and at least one downlink (DL) component carrier from a network of the wireless communication system, wherein at least one of the at least one UL component carrier is configured for PUCCH transmission; and
performing at least one PUCCH transmission corresponding to the
at least one DL component carrier to the network on one of at least one of the at least one UL component carrier configured for PUCCH transmission according to at least one PUCCH format, wherein the at least one PUCCH format is configured with at least one PUCCH resource index, at least one cyclic time shift of at least one base sequence or both.

7. The method of claim 1 or 6, wherein the mobile device is configured to perform the at least one PUCCH transmission to the network only on a specific UL component carrier.

8. The method of claim 6, wherein each of the at least one PUCCH format is configured with the at least one PUCCH resource index, the at least one cyclic time shift of the at least one base sequence, or both.

9. The method of claim 6, wherein for one of the at least one PUCCH format, the network configures at least one of a common PUCCH resource index and at least one cyclic time shift to the mobile device for the at least one DL component carrier, wherein a different base sequence is configured for each of the at least one DL component carrier.

10. The method of claim 9, wherein one of the at least one cyclic time shift is derived from a PUCCH resource index or is derived from a combination of the PUCCH resource index and a DL component carrier index.

11. The method of claim 3 or 9, wherein a cyclic shift hopping is applied for an inter-cell interference randomization; or a cyclic time shift remapping is applied for an intra-cell interference randomization.

12. The method of claim 6 further comprising modulating or scrambling the at least one PUCCH transmission of the at least one PUCCH format on a PUCCH region in a first subframe by using the at least one cyclic time shift of the at least one base sequence, wherein both the at least one PUCCH transmission of the at least one PUCCH format and at least one base sequence correspond to at least one transmission or signaling on the at least one DL component carrier in a second subframe.

13. The method of claim 5 or 12, wherein a sequence hopping or a sequence group hopping is applied to a plurality of reference signals transmitted on the PUCCH region.

14. The method of claim 5 or 12, wherein one of the at least one PUCCH format is used for at least one acknowledgment/negative acknowledgement (ACK/NACK) on the PUCCH region, wherein the at least one ACK/NACK corresponds to the at least one transmission on the at least one DL component carrier in the second subframe.

15. A method of handling a physical uplink (UL) control channel (PUCCH) transmission for a mobile device with a carrier aggregation (CA) in a wireless communication system, the method comprising:
receiving a configuration or an activation of the CA with at least
one UL component carrier and at least one downlink (DL) component carrier from a network of the wireless communication system; and
transmitting at least one PUCCH to the network in at least one
PUCCH resource on at least one of the at least one UL component carrier, wherein the at least one PUCCH comprises at least one of a channel quality indicator (CQI), a scheduling request (SR) and an acknowledgment/negative acknowledgement (ACK/NACK) corresponding to the at least one DL component carrier, and the PUCCH resource depends on at least one of a plurality of mobile device-specific configured parameters, a DL component carrier-specific offset, a DL component carrier-specific index, a plurality of received physical DL control channel (PDCCH) resources, a UL component carrier bandwidth, a PUCCH format, a cell-specific configuration, a orthogonal sequence hopping, a sequence group hopping pattern, a sequence group shift pattern, a cyclic time shift hopping, a pseudo random sequence generator and a plurality of multiplexing opportunities.

16. The method of claim 15, wherein the mobile device is configured with a high rank single user-multiple-input multiple-output (SU-MIMO) or a multiuser-MIMO (MU-MIMO).

17. The method of claim 15, wherein the at least one of the plurality of mobile device-specific configured parameters, the DL component carrier-specific offset, the DL component carrier-specific index, the plurality of received PDCCH resources, the UL component carrier bandwidth, the PUCCH format, the cell-specific configuration, the orthogonal sequence hopping, the sequence group hopping pattern, the sequence group shift pattern, the cyclic time shift hopping, the pseudo random sequence generator and the plurality of multiplexing opportunities is configured by a higher layer broadcast signaling or a mobile device-dedicated signaling.

18. The method of claim 15 further comprising receiving a configuration for a semi-persistent scheduling on a first DL component carrier of the at least one DL component carrier from the network on the first DL component carrier or a second DL component carrier of the at least one DL component carrier, wherein the configuration indicates at least one PUCCH resource index for the at least one PUCCH on the at least one of the at least one UL component carrier, which is linked to at least one of the first and the second DL component carriers.

19. The method of claim 15 further comprising receiving a PDCCH for a dynamic scheduling on a first DL component carrier of the at least one DL component carrier from the network on the first downlink component carrier or a second DL component carrier of the at least one DL component carrier, and the PDCCH explicitly indicates or implies the at least one PUCCH resource index for the at least one PUCCH on the at least one of the at least one UL component carrier, which is linked to at least one of the first and the second DL component carriers.

20. The method of claim 19, wherein the at least one PUCCH resource index implied by the PDCCH comprises at least one of the DL component carrier-specific offset and the DL component carrier-specific index for indication of at least one of the PUCCH resource and a cyclic time shift.

21. A communication device of a wireless communication system for performing the method of any one of the preceding claims, for handling physical uplink control channel transmission.
